# EUROPÄISCHE PATENTSCHRIFT

(11) **EP 3 535 463 B1**
(45) Veröffentlichungstag und Bekanntmachung des Hinweises auf die Patenterteilung: **09.12.2020**
(21) Anmeldenummer: 17788192.7
(22) Anmeldetag: 18.10.2017
(51) Int. Cl.: E05B 17/00, E05B 17/04, E05B 29/00

(54) **SCHLIESSEINHEIT FÜR EIN KRAFTFAHRZEUG**
LOCKING UNIT FOR A MOTOR VEHICLE
UNITÉ DE FERMETURE POUR UN VÉHICULE AUTOMOBILE

(30) Priorität: 04.11.2016 DE 102016121045
(43) Veröffentlichungstag der Anmeldung: 11.09.2019
(73) Patentinhaber: Huf Hülsbeck & Fürst GmbH & Co. KG, 42551 Velbert (DE)
(72) Erfinder: HABECKE, Matthias, 45529 Hattingen (DE)
(74) Vertreter: Patentanwälte Bals & Vogel
(86) Internationale Anmeldenummer: PCT/EP2017/076596
(87) Internationale Veröffentlichungsnummer: WO 2018/082924

(56) Entgegenhaltungen:
- EP-A1- 2 975 200
- DE-A1-102013 216 205
- DE-A1-102014 118 598
- FR-A5- 2 079 573

## Beschreibung

Die Erfindung betrifft eine Schließeinheit für ein Kraftfahrzeug aufweisend ein als Stator ausgebildetes Gehäuse, in welchem ein als Schließzylinder ausgebildeter Rotor angeordnet ist, in welchem bewegbar gelagerte Zuhaltungen angeordnet sind, wobei der Schließzylinder zumindest teilweise in einer Hülse angeordnet ist, welche mit einem Blockierelement koppelbar ist, welches mit einem Mitnehmer koppelbar ist, welcher mit einem Abtrieb verbunden ist, wobei ein Kupplungselement vorgesehen ist, welches mit dem Schließzylinder und dem Mitnehmer koppelbar ist.

Aus dem Stand der Technik ist eine Schließeinheit für ein Kraftfahrzeug bekannt, die einen Axialfreilauf aufweist. Die Schließeinheit umfasst ein als Stator ausgebildetes Gehäuse, in welchem ein als Schließzylinder ausgebildeter Rotor angeordnet ist. In dem Rotor sind bewegbar gelagerte Zuhaltungen angeordnet, wobei der Schließzylinder zumindest teilweise in einer Hülse angeordnet ist. Die Hülse ist mit einem Blockierelement koppelbar ist, welches wiederum mit einem Mitnehmer koppelbar ist. Der Mitnehmer ist mit einem Abtrieb verbunden ist, wobei ein Kupplungselement vorgesehen ist, welches mit dem Schließzylinder und dem Mitnehmer koppelbar ist. Die Hülse dient im Stand der Technik zur Aufnahme der Zuhaltungen, wenn ein nicht ordnungsgemäßer Schlüssel, beispielsweise ein Schraubenzieher, in den Schließzylinder gesteckt wird. Des Weiteren weist die Hülse Schrägen auf, welche zum Auskuppeln mit dem Blockierelement dienen. Beim sogenannten Picking versucht ein Dieb mit einem Werkzeug, die Positionen der Zuhaltungen zu ertasten. Bei der hier im Stand der Technik beschriebenen Schließeinheit fehlt ein sogenannter Pickingschutz.

Solche Schließeinheiten sind z.B. aus DE 10 2013 216 205 oder DE 10 2014 118 598 bekannt.

Daher ist die Aufgabe der Erfindung, mit einfachen konstruktiven Mittel, eine Schließeinheit bereitzustellen, bei welcher die Diebstahlsicherheit verbessert wird. Die Aufgabe wird gelöst durch den kennzeichnenden Teil des Patentanspruchs 1. Dabei weist der Schließzylinder eine Ausnehmung auf, die zur Aufnahme eines Verriegelungselement ausgebildet ist, wobei in der Ausnehmung mindestens ein elastisches Element, insbesondere ein Federlement, angeordnet ist, welches das Verriegelungselement nach außen in Richtung der Hülse drückt. Durch diese Maßnahme wird eine Schließeinheit aufweisend mit einem Axialfreilauf mit einem Pickingschutz versehen. Die bereits beim Axialfreilauf verwendete Hülse und der Schließzylinder werden geringfügig modifiziert, so dass ein Verriegelungselement darin aufgenommen werden kann. Versucht nun ein Dieb mit einem nicht ordnungsgemäßen Schlüssel, insbesondere mit einem Schraubenzieher, die Schließeinheit zu manipulieren, so werden die Zuhaltungen in die Hülse bewegt und bei einer Drehung des Schließzylinders wird die Kupplung zwischen der Hülse und dem Blockierelement aufgehoben. Das Blockierelement schiebt das Kupplungselement in Richtung des Abtriebs, wobei gleichzeitig das Blockierelement in den Mitnehmer bewegt wird. Die Drehung des Abtriebs wird verhindert, weil zusätzlich das Blockierelement innerhalb der Hülse drehgesichert ist.

Des Weiteren sorgt in vorteilhafterweise das Verriegelungselement dafür, dass ein Picking erschwert oder sogar verhindert wird. Beim Picking werden Toleranzen der Bauteile der Schließeinheit ausgenutzt. Mit entsprechenden Pickingwerkzeugen wird versucht, die einzelnen Zuhaltungen in den Schließzylinder einzuziehen und zu drehen, so dass ein Einfahren der Zuhaltungen in die Hülse verhindert wird. Das Verriegelungselement, welches platzsparend in der Schließeinheit angeordnet wird, verhindert beim Picking die Drehung der Zuhaltung. Versucht nun ein Dieb die Zuhaltung reinzuziehen und zu drehen, stößt die Zuhaltung mit einer Seite an das Verriegelungselement.

Wenn ein ordnungsgemäßer Schlüssel verwendet wird, ist ein problemloses Drehen des Schließzylinders möglich, weil das Verriegelungselement in die Zuhaltungen bewegt wird.

Im Ergebnis wird durch einfache konstruktive Mittel, insbesondere durch das Verriegelungselement und durch mindestens ein elastisches Mittel, welche beide einfach und sicher von dem Schließzylinder aufgenommen werden können, die Sicherheit der Schließeinheit verbessert, so dass die erfindungsgemäße Schließeinheit sowohl einen Axialfreilauf, als auch einen Pickingschutz aufweist.

Nach einer bevorzugten Ausführung der Schließeinheit kann vorgesehen sein, dass jede Zuhaltung eine Aussparung aufweist, die zur Aufnahme des Verriegelungselements ausgebildet ist. Durch diese Maßnahme wird sichergestellt, dass bei der Verwendung eines ordnungsgemäßen Schlüssel der Schließzylinder sich einwandfrei drehen lässt. Des Weiteren sind die Aussparungen in den Zuhaltungen einfach herzustellen, weil das Stanzwerkzeug zur Herstellung der Zuhaltungen nur geringfügig verändert werden muss.

Nach einer weiteren bevorzugten Ausführung der Schließeinheit kann vorgesehen sein, dass die Hülse eine Hülsenausnehmung aufweist, die zur Aufnahme des Verriegelungselements ausgebildet ist. Die Hülse dient daher sowohl zur Realisierung des Pickingschutzes, als auch zur Sicherstellung des Axialfreilaufes. Daher sorgt die Hülse für einen zweifachen Schutz hinsichtlich der Diebstahlsicherheit. Des Weiteren ist die Hülsenausnehmung leicht und kostengünstig herstellbar. Bestehende Werkzeuge müssen nur leicht modifiziert werden, um die Hülsenausnehmung herzustellen.

Um die Haptik für einen Benutzer bei der Drehung der Schließeinheit, insbesondere des Schließzylinders, mit dem ordnungsgemäßen Schlüssel zu verbessern, kann vorgesehen sein, dass die Hülsenausnehmung mindestens eine erste Hülsenschräge, und vorzugsweise eine zweite Hülsenschräge, aufweist. Bei der Drehung des Schließzylinders durch den Benutzer wird daher weniger Kraft benötigt und der Verschleiß des Schließzylinders sowie der Hülse wird verringert.

Die Haptik für einen Benutzer bei der Drehung der Schließeinheit, insbesondere des Schließzylinders, mit dem ordnungsgemäßen Schlüssel kann weiter verbessert werden, wenn das Verriegelungselement mindestens eine erste Schräge, und vorzugsweise eine zweite Schräge, aufweist.

Um die Federelemente platzsparend und sicher in der Schließeinheit anzuordnen, kann vorgesehen sein, dass das Verriegelungselement für jedes elastische Element, insbesondere Federelement, eine Kavität aufweist, die zur Lagerung des elastischen Elements, insbesondere Federelements, ausgebildet ist. Des Weiteren kann es sehr vorteilhaft sein, wenn zwei Kavitäten im Verriegelungselement vorgesehen werden. Die Kavitäten sollten im Bereich der distalen Enden des Verriegelungselements angeordnet werden. Dies weist den Vorteil auf, dass Verkippungen des Verriegelungselements verhindert werden können.

Sehr kostengünstig und einfach kann die Konstruktion der Schließeinheit ausgebildet werden, wenn das Federlement als Spiralfeder ausgebildet ist.

Der Pickingschutz bei der erfindungsgemäßen Schließeinheit kann sichergestellt werden, wenn bei einem unbetätigten Betriebszustand der Schließeinheit die Zuhaltungen zumindest teilweise in die Hülse, insbesondere in Hülsenöffnungen, eintauchen und gleichzeitig das Verriegelungselement in der Hülsausnehmung sowie in der Ausnehmung des Schließzylinders angeordnet ist.

Die Haptik bei der Drehung des Schließzylinders und die Zuverlässigkeit der Schließeinheit kann verbessert werden, wenn beim Verwenden eines ordnungsgemäßen Schlüssels die Zuhaltungen innerhalb des Schließzylinders angeordnet sind und bei einer Drehung des Schließzylinders das Verriegelungselement zumindest zeitweise vollständig in der Ausnehmung des Schließzylinders angeordnet ist.

Der Pickingschutz der Schließeinheit kann weiter verbessert werden, wenn bei der Benutzung eines nicht-ordnungsgemäßen Schlüssels, insbesondere eines Pickingwerkzeugs, das Verriegelungselement stets in einer Hülsenausnehmung der Hülse angeordnet ist.

Die Erfindung wird anhand eines Ausführungsbeispiels näher beschrieben. Die Figuren zeigen:
- Figur 1: eine erfindungsgemäße Schließeinheit dargestellt als Explosionszeichnung,

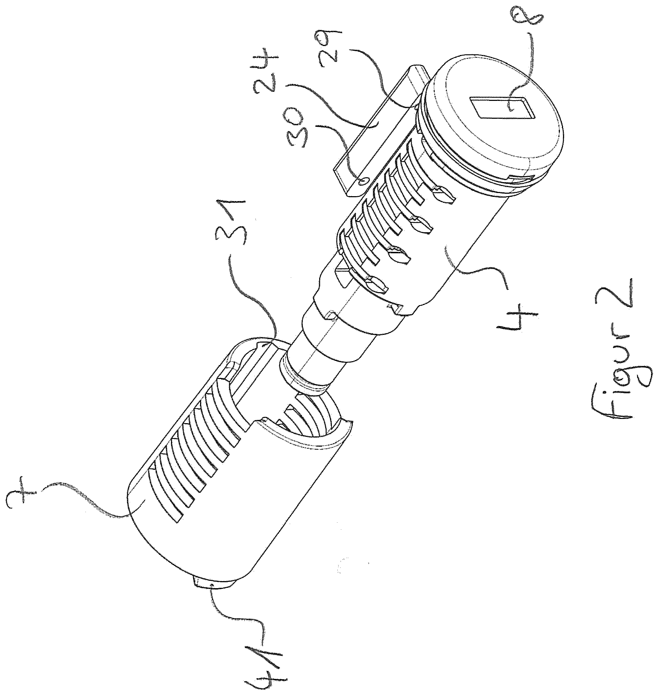

- Figur 2: die erfindungsgemäße Schließeinheit mit einem Verriegelungselement ohne elastische Elemente gemäß einer vereinfachten Explosionszeichnung,

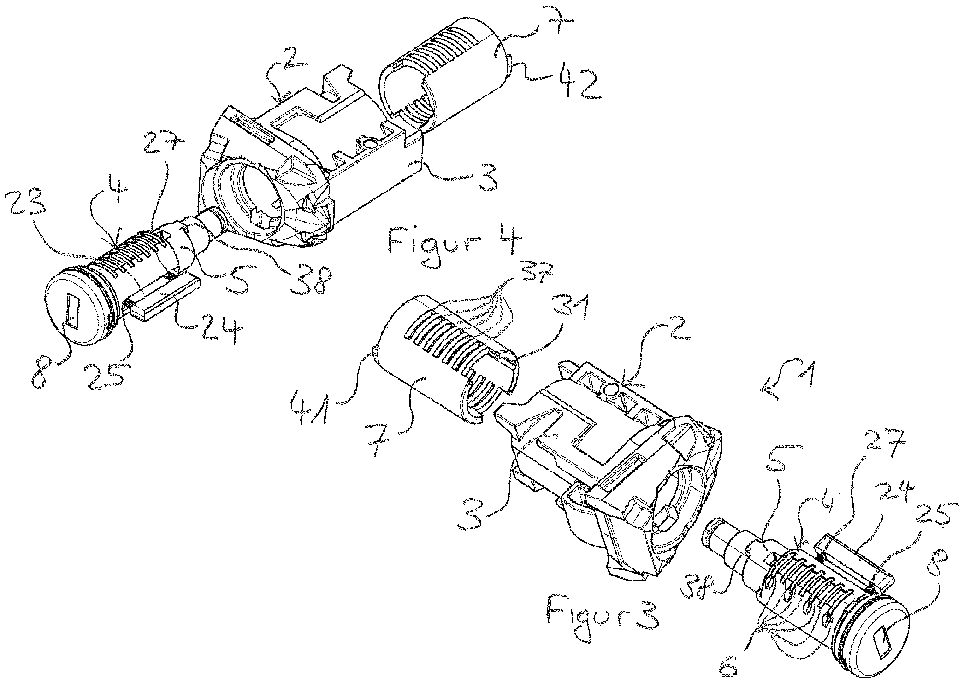

- Figur 3: die erfindungsgemäße Schließeinheit mit dem Verriegelungselement mit elastischen Elementen gemäß einer vereinfachten Explosionszeichnung,
- Figur 4: die erfindungsgemäße Schließeinheit mit dem Verriegelungselement mit elastischen Elementen gemäß einer weiteren vereinfachten Explosionszeichnung,

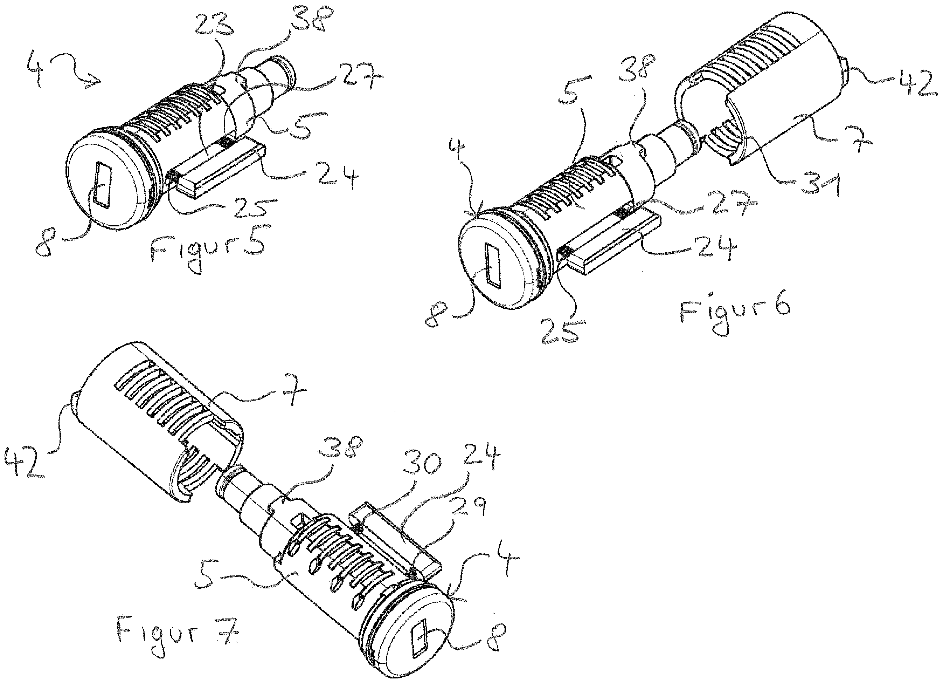

- Figur 5: einen Schließzylinder der erfindungsgemäßen Schließeinheit aufweisend das Verriegelungselement mit den elastischen Elementen gemäß einer Explosionszeichnung,
- Figur 6: den Schließzylinder und eine Hülse der erfindungsgemäßen Schließeinheit aufweisend das Verriegelungselement mit den elastischen Elementen gemäß einer Explosionszeichnung,
- Figur 7: den Schließzylinder und die Hülse der erfindungsgemäßen Schließeinheit aufweisend das Verriegelungselement mit den elastischen Elementen gemäß einer weiteren Explosionszeichnung,

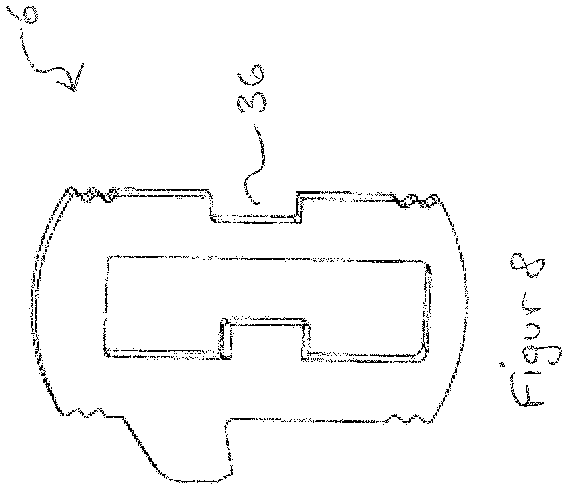

- Figur 8: eine Zuhaltung der erfindungsgemäßen Schließeinheit in einer Ansicht von vorne,
- Figur 9: die Hülse mit dem darin angeordneten Schließzylinder aufweisend die Zuhaltung bei der Verwendung eines ordnungsgemäßen Schlüssels in einer Schnittansicht,
- Figur 10: die Hülse mit dem darin angeordneten Schließzylinder in einer gedrehten Stellung aufweisend die Zuhaltung bei der Verwendung des ordnungsgemäßen Schlüssels in einer Schnittansicht, und
- Figur 11: die Hülse mit dem darin angeordneten Schließzylinder aufweisend die Zuhaltung bei der Verwendung eines nicht ordnungsgemäßen Schlüssels in einer Schnittansicht.

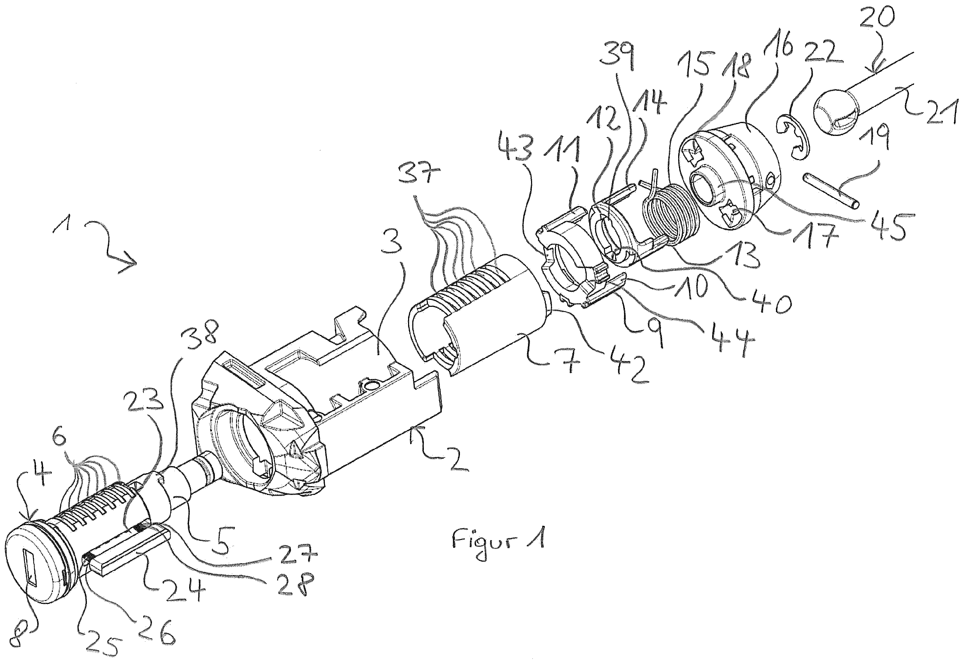

In der Figur 1 ist eine erfindungsgemäße Schließeinheit 1 für ein Kraftfahrzeug dargestellt. Die Schließeinheit 1 weist ein als Stator 2 ausgebildetes Gehäuse 3 auf. Innerhalb des Gehäuses 3 ist ein als Rotor 4 ausgebildeter Schließzylinder 5 angeordnet, in welchem bewegbar gelagerte Zuhaltungen 6 vorgesehen sind. Die Zuhaltungen 6 sind innerhalb des Schließzylinders 5 mittels nicht näher gezeigter Zuhaltefedern federgelagert. Der Schließzylinder 5 ist innerhalb einer zylinderförmigen Hülse 7 angeordnet, so dass sich folglich die Hülse 7 zwischen dem Gehäuse 3 und dem Schließzylinder 5 befindet. Ferner weist der Schließzylinder 5 einen als Einführöffnung ausgebildeten Schlitz 8 auf, der zur Einführung eines Schlüssels dient. Die Hülse 7 ist mit einem Blockierelement 9 aufweisend einen ersten Blockierschenkel 10 und einen Blockierschenkel 11 gekoppelt, wobei das Blockierelement 9 wiederum mit einem Kupplungselement 12 aufweisend einen ersten Kupplungsschenkel 13 und einen zweiten Kupplungsschenkel 14 verbunden ist. Das Kupplungselement 12 ist im montierten Zustand der Schließeinheit 1 von dem Blockierelement 9 umgeben, wobei das Kupplungselement 12 zur Lagerung eines Kupplungsfederelements 15 dient. Des Weiteren ist ein Mitnehmer 16 vorgesehen, welcher eine erste Mitnehmervertiefung 17 und eine zweite Mitnehmervertiefung 18 aufweist. Die Mitnehmervertiefungen 17, 18 dienen zur Aufnahme und Kopplung des Blockierelements 9 bzw. des Kupplungselements 12, wie dies nachfolgend noch bei der Beschreibung der Funktionsweise näher erläutert wird. Der Mitnehmer 16 ist mittels einer zylinderförmigen Stange 19 mit einer als Abtrieb 20 ausgebildeten Drehstange 21 verbunden, welcher zum Betätigen eines nicht näher gezeigten Kraftfahrzeugschlosses dient. Ferner ist noch ein Befestigungselement 22 vorgesehen, welches zum Fixieren der Bauteile der Schließeinheit 1 dient. Erfindungsgemäß weist der Schließzylinder 5 eine Ausnehmung 23 auf, die zur Aufnahme eines Verriegelungselements 24 ausgebildet ist. In der Ausnehmung ist ein erstes als Federelement 25 ausgestaltetes elastisches Element 26 und ein zweites als Federelement 27 ausgestaltetes elastisches Element 28 angeordnet, wobei im vorliegenden Ausführungsbeispiel die Federelemente 25, 27 als Spiralfedern ausgebildet sind, die in nicht näher gezeigten Ausnehmungen oder Vertiefungen des Schließzylinders 5 gelagert sein können. Die Federelemente 25, 27 sorgen dafür, dass das Verriegelungselement 24 nach außen in Richtung Hülse 7 gedrückt wird. Des Weiteren weist das Verriegelungselement 24 eine erste Kavität 29 zur Lagerung des ersten Federelements 25 und eine zweite Kavität 30 zur Lagerung des zweiten Federelements 27 auf. Ferner ist vorgesehen, dass die Hülse 7 eine Hülsenausnehmung 31 aufweist, die zur Aufnahme des Verriegelungselements 24 ausgebildet ist, wobei die Hülsenausnehmung 31 mindestens eine erste Hülsenschräge 32 und eine zweite Hülsenschräge 33 umfasst. Das Verriegelungselement 24 weist ebenfalls Schrägen auf, und zwar eine erste Schräge 34 und eine zweite Schräge 35, die je nach Betriebszustand der Schließeinheit mit den Hülsenschrägen 32, 33 der Hülse 7 zusammen wirken. Des Weiteren weist jede Zuhaltung 6 jeweils eine Aussparung 36 auf, die zur Aufnahme des Verriegelungselements 24 ausgestaltet ist.

Nachfolgend wird die Funktionsweise der Schließeinheit 1 erläutert. Beim ersten Fall wird ein ordnungsgemäßer Schlüssel verwendet, mit welchem sich das der Schließeinheit 1 zugeordnete Kraftfahrzeugschloss entriegeln bzw. öffnen lässt.

Beim zweiten Fall wird ein nicht-ordnungsgemäßer Schlüssel, insbesondere ein Pickingwerkzeug, benutzt.

Gemäß dem ersten Fall wird ein nicht näher dargestellter ordnungsgemäßer Schlüssel verwendet, um das der Schließeinheit 1 zugeordnete Kraftfahrzeugschloss zu entriegeln bzw. zu öffnen.

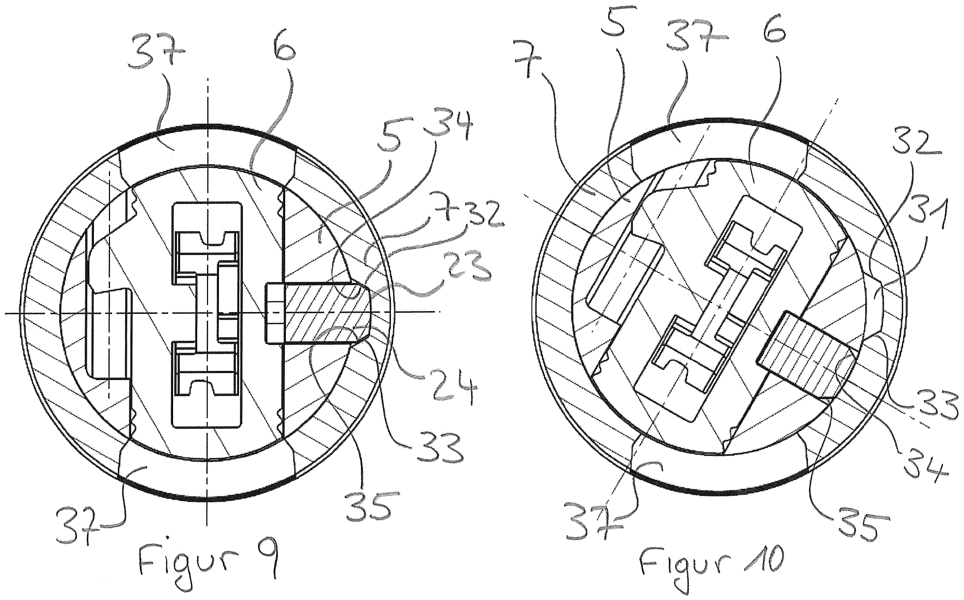

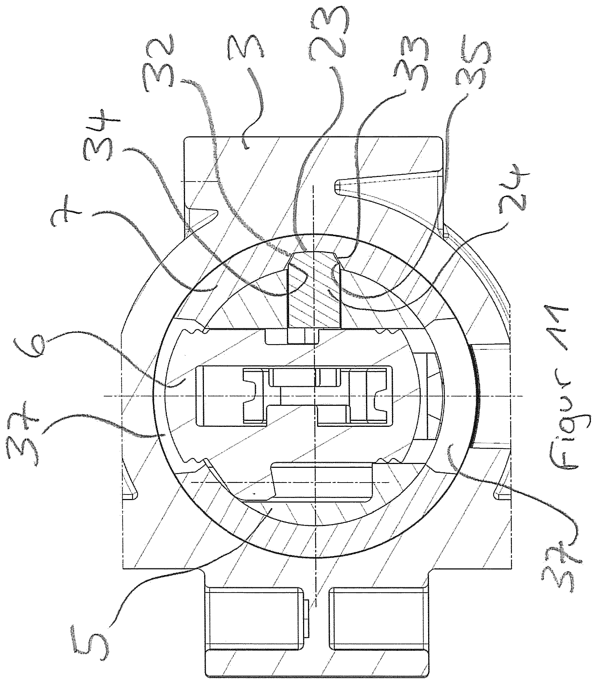

Bei einem unbetätigten Betriebszustand der Schließeinheit 1 sind die Zuhaltungen 6 ausgefahren und tauchen zumindest teilweise in Hülsenöffnungen 37 der Hülse 7 ein. Gleichzeitig ist das Verrieglungselement 24 in der Hülsenausnehmung 31 sowie in der Ausnehmung 23 des Schließzylinders 5 angeordnet, wie dies in der Figur 11 gezeigt ist. Dabei befindet sich das Verriegelungselement 24 dann außerhalb der Aussparung 36 der jeweiligen Zuhaltung 6. Wird nun der ordnungsgemäße Schlüssel in den Schlitz 8 des Schließzylinders 5 eingeführt, so werden die Zuhaltungen 6 aus den jeweiligen Hülsenöffnungen 37 heraus in den Schließzylinder 5 gezogen, so dass sich der Schließzylinder 5 innerhalb der Hülse 7 drehen lässt. Das Verriegelungselement 24 wird aufgrund der elastischen Elemente 26, 28 weiter nach außen in Richtung der Hülse 7 gedrückt, wie es in Figur 9 visualisiert ist. Wird der Schließzylinder 5 mittels des ordnungsgemäßen Schlüssels durch einen Benutzer gedreht, so wird je nach Drehrichtung das Verriegelungselement 24 gegen die Federkraft der Federelemente 25, 27 mittels des Zusammenwirkens der Hülsenschräge 32 mit der Schräge 34 bzw. mittels des Zusammenwirkens der Hülsenschräge 33 mit der Schräge 35 in die Aussparungen 36 der Zuhaltungen 6 bewegt. Wenn sich der Schließzylinder 5 dreht, dreht sich folglich auch das Kupplungselement 12, welches drehfest und nur axial verschieblich mit dem Schließzylinder 5 verbunden ist. Die Kopplung des Kupplungselements 12 mit dem Schließzylinder 5 erfolgt über einen am Schließzylinder 5 angeordneten ersten Zapfen 38, welcher mit einer am Kupplungselement 12 angeordneten ersten Kupplungsausnehmung 39 verbunden ist, und über einen am Schließzylinder 5 angeordneten nicht näher dargestellten zweiten Zapfen, welcher mit einer am Kupplungselement 12 angeordneten zweiten Kupplungsausnehmung 40 verbunden ist. Wie bereits oben beschrieben, ist der erste Kupplungsschenkel 13 mit der ersten Mitnehmervertiefung 17 und der zweite Kupplungsschenkel 14 mit der zweiten Mitnehmervertiefung 18 verbunden, so dass das Kupplungselement 12 und der Mitnehmer 16 miteinander verbunden ist. Dreht sich nun das Kupplungselement 12, so wird dementsprechend auch der Mitnehmer 16 gedreht. Da der Abtrieb 20, welcher mit dem Kraftfahrzeugschloss verbunden ist, mit dem Mitnehmer 16 verbunden ist, dreht sich auch der Abtrieb 20, welcher dann das Kraftfahrzeugschloss entriegelt bzw. öffnet oder verriegelt bzw. schließt. Nach dem Entriegelungs- bzw. Verriegelungsvorgang des Kraftfahrzeugschlosses wird der Schließzylinder 5 wieder zurück in seine Ausgangsposition gemäß Figur 11 bewegt. Dies kann durch eine nicht gezeigte Rückstellfeder und/oder mittels des ordnungsgemäßen Schlüssels durchgeführt werden. Wenn der ordnungsgemäße Schlüssel aus dem Schließzylinder 5 entfernt wird, werden die Zuhaltungen 6 durch ihre jeweiligen Zuhaltefedern in Richtung der Hülse 7 bewegt und tauchen in die Hülsenöffnungen 37 wieder ein. Dies ist aber erst dann möglich, wenn das Verriegelungselement 24 wieder zurück in die Hülsenausnehmung 31 bewegt wird, weil das Verriegelungselement 24 die Aussparungen 36 der jeweiligen Zuhaltungen 6 verlassen muss. Die Rückführung des Verriegelungselements 24 durch die Federelemente 25, 27 in die Hülsenausnehmung 31 erfolgt dann, wenn das Verriegelungselement 24 sich gegenüber der Hülsenausnehmung 31 befindet. Aufgrund der durch die Federelemente 25, 27 auf das Verriegelungselement 24 wirkenden Federkraft, wird das Verriegelungselement 24 wieder zurück in die Hülsenausnehmung 31 gedrückt.

Gemäß dem zweiten Fall wird ein nicht näher dargestellter nicht-ordnungsgemäßer Schlüssel verwendet, insbesondere ein Pickingwerkzeug, um die Schließeinheit 1 zu manipulieren. Des Weiteren sorgt in vorteilhafterweise das Verriegelungselement 24 dafür, dass ein Picking erschwert oder sogar verhindert wird. Beim Picking werden Toleranzen der Bauteile der Schließeinheit 1 ausgenutzt. Mit entsprechenden Pickingwerkzeugen wird versucht, die einzelnen Zuhaltungen 6 in den Schließzylinder 5 einzuziehen und zu drehen, so dass ein Einfahren bzw. Bewegen der Zuhaltungen 6 in die Hülse 7 verhindert wird. Das Verriegelungselement 24, welches platzsparend in der Schließeinheit 1 angeordnet ist, verhindert beim Picking die Drehung der Zuhaltung 6. Versucht nun ein Dieb die Zuhaltung 6 aus der Hülse 7 in den Schließzylinder 5 reinzuziehen und zu drehen, stößt die Zuhaltung 6 mit einer Seite an das Verriegelungselement 24. Wenn dieser Pickingversuch scheitert, könnte der Dieb auf die Idee kommen, gewaltsam durch ein Drehen des Pickingwerkzeugs den Schließzylinder 5 zu drehen. In diesem Fall befinden sich die Zuhaltungen 6 weiter in der Hülse 7, insbesondere in den Hülsenöffnungen 37, so dass bei einer Drehung des Schließzylinders 5 sich die Hülse 7 mitdreht. Wie oben erläutert, befindet sich das Blockierelement 9 drehfest innerhalb des Stators 2, wobei die Blockierschenkel 11, 12 jeweils in nicht gezeigte innerhalb des Gehäuses 3 angeordnete Sperrausnehmungen axial beweglich aufgenommen sind, wodurch sich das Blockierelement 9 lediglich axial verschieben lässt. Bei der Drehung der Hülse 7 koppelt das Blockierelement 9 aus, indem an der Hülse 7 angeordnete erste und zweite Axialfreilaufschrägen 41, 42 mit an dem Blockierelement 9 angeordneten ersten und zweiten Axialfreilaufausnehmung 43, 44, welche ebenfalls Schrägen aufweisen, zusammenwirken. Bei dieser Drehung der Hülse 7 wird folglich das Blockierelement 9 in Richtung des Abtriebs 20 axial bewegt. Dabei wird dann gleichzeitig das auf dem Schließzylinder 5 drehfest angeordnete Kupplungselement 12 durch das Blockierelement 9 in Richtung des Abtriebs 20 bewegt, wobei dann das als Spiralfeder ausgebildete Kupplungsfederelement 15 zusammengedrückt wird. Damit das Kupplungsfederelement 15 stabil in seiner Lage verbleibt, ist auf dem Mitnehmer 16 ein Lagerelement 45 angeordnet. Im Zuge der Bewegung des Kupplungselements 12 tauchen die Kupplungsschenkel 13, 14 noch tiefer in die jeweilige Mitnehmervertiefung 17, 18 ein. Die Mitnehmervertiefung ist derart ausgestaltet, dass auch die Blockierschenkel 10, 11 in die jeweilige Mitnehmervertiefungen 17, 18 eintauchen, so dass die Kupplungsschenkel 13, 14 parallel zueinander innerhalb des Mitnehmers 16 angeordnet sind. Dadurch wird der konstruktive Aufwand bei der Herstellung des Mitnehmers 16 verringert und die Kupplungsschenkel 13, 14 und die Blockierschenkel 10, 11 können platzsparend innerhalb des Blockierelements gelagert werden, wenn ein nicht-ordnungsgemäßer Schlüssel verwendet wird. Im Ergebnis wird die Drehung des Abtriebs 20 durch das Blockierelement 9 blockiert. Es sei noch erwähnt, dass bei der Benutzung eines nicht-ordnungsgemäßen Schlüssels das Verriegelungselement 24 stets in der Hülsenausnehmung 31 der Hülse 7 angeordnet ist.

Wird der nicht-ordnungsgemäße Schlüssel, insbesondere das Pickingwerkzeug, wieder aus dem Schließzylinder 5 entfernt, so wird bei einer Drehung des Schließzylinders 5 das Blockierelement 9 durch das Kupplungselement 12 und das Kupplungsfederelement 15 wieder in Richtung des Schlitzes 8 bewegt, wenn die Axialfreilaufschrägen 41, 42 wieder in die jeweiligen Axialfreilaufausnehmung 43, 44 eintauchen können. Dabei werden die Blockierschenkel 10, 11 wieder aus den jeweiligen Mitnehmervertiefung 17, 18 vollständig herausbewegt. Die Kupplungsschenkel 13, 14 des Kupplungselements 12 verbleiben zumindest teilweise in den jeweiligen Mitnehmervertiefung 17, 18 des Mitnehmers 16, um sicherzustellen, dass bei der Verwendung eines ordnungsgemäßen Schlüssels und einer nachfolgenden Drehung des Schließzylinders 5, dieser 5 über das Kupplungselement 12, den Mitnehmer 16 mit dem Abtrieb 20 gekoppelt ist, um das Kraftfahrzeugschloss zu betätigen.

Im Ergebnis ist die erfindungsgemäße Schließeinheit 1 sicherer gegen Diebstahlversuche, weil erstens ein Picking verhindert werden kann, weil zweitens bei der Verwendung eines nicht-ordnungsgemäßen Schlüssels ein Axialfreilauf den Schließzylinder 5 vom Abtrieb 20 entkoppelt, und weil drittens eine Drehung des Abtriebs 20 durch das Blockierelement 9 verhindert wird, wenn beispielsweise mit einer Zange die Drehstange 21 betätigt wird.

Alternative Ausgestaltungen der Schließeinheit 1 sind möglich, so dass auch nur ein einziges elastisches Element verwendet werden kann, um das Verriegelungselement 24 in Richtung der Hülse 7 zu drücken. Ebenfalls ist es denkbar, dass die vorgeschlagene Lösung, insbesondere die Anordnung des Verriegelungselements 24, nicht nur bei der Schließeinheit 1 mit einem Axialfreilauf, sondern auch bei einer Schließeinheit mit einem Radialfreilauf verwendet werden kann.

### Bezugszeichenliste

- 1: Schließeinheit
- 2: Stator
- 3: Gehäuse
- 4: Rotor
- 5: Schließzylinder
- 6: Zuhaltungen
- 7: Hülse
- 8: Schlitz
- 9: Blockierelement
- 10: erster Blockierschenkel
- 11: zweiter Blockierschenkel
- 12: Kupplungselement
- 13: erster Kupplungsschenkel
- 14: zweiter Kupplungsschenkel
- 15: Kupplungsfederelement
- 16: Mitnehmer
- 17: erste Mitnehmervertiefung
- 18: zweite Mitnehmervertiefung
- 19: Stange
- 20: Abtrieb
- 21: Drehstange
- 22: Befestigungselement
- 23: Ausnehmung
- 24: Verriegelungselement
- 25: erstes Federelement
- 26: erstes elastisches Element
- 27: zweites Federelement
- 28: zweites elastisches Element
- 29: erste Kavität
- 30: zweite Kavität
- 31: Hülsenausnehmung
- 32: erste Hülsenschräge
- 33: zweite Hülsenschräge
- 34: erste Schräge
- 35: zweite Schräge
- 36: Aussparung
- 37: Hülsenöffnungen
- 38: erster Zapfen
- 39: erste Kupplungsausnehmung
- 40: zweite Kupplungsausnehmung
- 41: erste Axialfreilaufschräge
- 42: zweite Axialfreilaufschräge
- 43: erste Axialfreilaufausnehmung
- 44: zweite Axialfreilaufausnehmung
- 45: Lagerelement

## Patentansprüche

1. Schließeinheit (1) für ein Kraftfahrzeug aufweisend ein als Stator (2) ausgebildetes Gehäuse (3), in welchem ein als Schließzylinder (5) ausgebildeter Rotor (4) angeordnet ist, in welchem bewegbar gelagerte Zuhaltungen (6) angeordnet sind, wobei der Schließzylinder (5) zumindest teilweise in einer Hülse (7) angeordnet ist, welche mit einem Blockierelement (9) koppelbar ist, welches mit einem Mitnehmer (16) koppelbar ist, welcher mit einem Abtrieb (20) verbunden ist, wobei ein Kupplungselement (12) vorgesehen ist, welches mit dem Schließzylinder (5) und dem Mitnehmer (16) koppelbar ist,
**dadurch gekennzeichnet, dass**
der Schließzylinder (5) eine Ausnehmung (23) aufweist, die zur Aufnahme eines Verriegelungselement (24) ausgebildet ist, wobei in der Ausnehmung (23) mindestens ein elastisches Element (26, 28), insbesondere ein Federlement (25, 27), angeordnet ist, welches das Verriegelungselement (24) nach außen in Richtung der Hülse (7) drückt.

2. Schließeinheit (1) für ein Kraftfahrzeug nach Anspruch 1, **dadurch gekennzeichnet, dass** jede Zuhaltung (6) eine Aussparung (36) aufweist, die zur Aufnahme des Verriegelungselements (24) ausgebildet ist.

3. Schließeinheit (1) für ein Kraftfahrzeug nach Anspruch 1 oder 2, **dadurch gekennzeichnet, dass** die Hülse (7) eine Hülsenausnehmung (31) aufweist, die zur Aufnahme des Verriegelungselements (24) ausgebildet ist.

4. Schließeinheit (1) für ein Kraftfahrzeug nach Anspruch 3, **dadurch gekennzeichnet, dass** die Hülsenausnehmung (31) mindestens eine erste Hülsenschräge (32), und vorzugsweise eine zweite Hülsenschräge (33), aufweist.

5. Schließeinheit (1) für ein Kraftfahrzeug nach mindestens einem der Ansprüche 1 bis 4, **dadurch gekennzeichnet, dass** das Verriegelungselement (24) mindestens eine erste Schräge (34), und vorzugsweise eine zweite Schräge (35), aufweist.

6. Schließeinheit (1) für ein Kraftfahrzeug nach mindestens einem der Ansprüche 1 bis 5, **dadurch gekennzeichnet, dass** das Verriegelungselement (24) für jedes elastische Element (26, 28), insbesondere Federelement (25, 27), eine Kavität (29, 30) aufweist, die zur Lagerung des elastischen Elements (26, 28), insbesondere Federelements (25, 27), ausgebildet ist.

7. Schließeinheit (1) für ein Kraftfahrzeug nach mindestens einem der Ansprüche 1 bis 6, **dadurch gekennzeichnet, dass** das Federlement (25, 27) als Spiralfeder ausgebildet ist.

8. Schließeinheit (1) für ein Kraftfahrzeug nach mindestens einem der Ansprüche 1 bis 7, **dadurch gekennzeichnet, dass** bei einem unbetätigten Betriebszustand der Schließeinheit (1) die Zuhaltungen (6) zumindest teilweise in die Hülse (7), insbesondere in Hülsenöffnungen (37), eintauchen und gleichzeitig das Verriegelungselement (24) in der Hülsausnehmung (31) sowie in der Ausnehmung (23) des Schließzylinders (5) angeordnet ist.

9. Schließeinheit (1) für ein Kraftfahrzeug nach mindestens einem der Ansprüche 1 bis 8, **dadurch gekennzeichnet, dass** beim Verwenden eines ordnungsgemäßen Schlüssels die Zuhaltungen (6) innerhalb des Schließzylinders (5) angeordnet sind und bei einer Drehung des Schließzylinders (5) das Verriegelungselement (24) zumindest zeitweise vollständig in der Ausnehmung (23) des Schließzylinders (5) angeordnet ist.

10. Schließeinheit (1) für ein Kraftfahrzeug nach mindestens einem der Ansprüche 3 bis 9, dass bei der Benutzung eines nicht-ordnungsgemäßen Schlüssels, insbesondere eines Pickingwerkzeugs, das Verriegelungselement (24) stets in der Hülsenausnehmung (31) der Hülse (7) angeordnet ist.

## Claims

1. Locking unit (1) for a motor vehicle comprising a housing (3) in the form of a stator (2), in which a rotor (4) in the form of a locking cylinder (5) is arranged, in which movably mounted tumblers (6) are arranged, wherein the locking cylinder (5) is arranged at least partially in a sleeve (7), which can be coupled to a blocking element (9) which can be coupled to an actuator (16) which is connected to an output (20), wherein a coupling element (12) is provided which can be coupled to the locking cylinder (5) and the actuator (16), **characterized in that**
the locking cylinder (5) comprises a clearance (23) which is designed to receive a locking element (24), wherein at least one elastic element (26, 28), in particular a spring element (25, 27), is arranged in the clearance (23), which presses the locking element (24) outwards in the direction of the sleeve (7).

2. Locking unit (1) for a motor vehicle according to claim 1, **characterized in that** each tumbler (6) comprises a recess (36) which is designed to receive the locking element (24).

3. Locking unit (1) for a motor vehicle according to claim 1 or 2, **characterized in that** the sleeve (7) comprises a sleeve clearance (31) which is designed to receive the locking element (24).

4. Locking unit (1) for a motor vehicle according to claim 3, **characterized in that** the sleeve clearance (31) comprises at least a first sleeve bevel (32), and preferably a second sleeve bevel (33).

5. Locking unit (1) for a motor vehicle according to at least one of claims 1 to 4, **characterized in that** the locking element (24) comprises at least a first bevel (34), and preferably a second bevel (35).

6. Locking unit (1) for a motor vehicle according to at least one of claims 1 to 5, **characterized in that** the locking element (24) for each elastic element (26, 28), in particular the spring element (25, 27), comprises a cavity (29, 30) which is designed for mounting the elastic element (26, 28), in particular the spring element (25, 27).

7. Locking unit (1) for a motor vehicle according to at least one of claims 1 to 6, **characterized in that** the spring element (25, 27) is designed as a spiral spring.

8. Locking unit (1) for a motor vehicle according to at least one of claims 1 to 7, **characterized in that** in an unactuated operating state of the locking unit (1) the tumblers (6) at least partially penetrate into the sleeve (7), in particular into sleeve openings (37), and at the same time the locking element (24) is arranged in the sleeve clearance (31) as well as in the clearance (23) of the locking cylinder (5).

9. Locking unit (1) for a motor vehicle according to at least one of claims 1 to 8, **characterized in that**, when a proper key is used, the tumblers (6) are arranged within the locking cylinder (5) and when the locking cylinder (5) is rotated, the locking element (24) is at least temporarily completely arranged in the clearance (23) of the locking cylinder (5).

10. Locking unit (1) for a motor vehicle according to at least one of claims 3 to 9, **characterized in that**, when a non-proper key is used, in particular a picking tool, the locking element (24) is always arranged in the sleeve clearance (31) of the sleeve (7).

## Revendications

1. Unité de fermeture (1) pour un véhicule automobile, comprenant un boîtier (3) en forme de stator (2), dans lequel est disposé un rotor (4) en forme de cylindre de fermeture (5), dans lequel sont disposés des gâchettes (6) montées mobiles, le cylindre de fermeture (5) étant disposé au moins partiellement dans une douille (7), qui peut être couplé à un élément de blocage (9) qui peut être couplé à un entraîneur (16) qui est relié à une sortie (20), dans lequel il est prévu un élément de couplage (12) qui peut être couplé au cylindre de fermeture (5) et à l'entraîneur (16),
**caractérisé en ce que**
le cylindre de fermeture (5) présente un évidement (23) qui est conçu pour recevoir un élément de verrouillage (24), au moins un élément élastique (26, 28), en particulier un élément de ressort (25, 27), étant disposé dans l'évidement (23), qui pousse l'élément de verrouillage (24) vers l'extérieur en direction du douille (7).

2. Unité de fermeture (1) pour un véhicule automobile selon la revendication 1, **caractérisée en ce que** chaque gâchette (6) présente une niche (36) qui est conçue pour recevoir l'élément de verrouillage (24).

3. Unité de fermeture (1) pour un véhicule automobile selon la revendication 1 ou 2, **caractérisée en ce que** la douille (7) présente un évidement de douille (31) qui est conçu pour recevoir l'élément de verrouillage (24).

4. Unité de fermeture (1) pour un véhicule automobile selon la revendication 3, **caractérisée en ce que** l'évidement de douille (31) présente au moins un premier biseau de douille (32), et de préférence un deuxième biseau de douille (33).

5. Unité de fermeture (1) pour un véhicule automobile selon au moins une des revendications 1 à 4, **caractérisée en ce que** l'élément de verrouillage (24) présente au moins un premier biseau (34), et de préférence un deuxième biseau (35).

6. Unité de fermeture (1) pour un véhicule automobile selon au moins une des revendications 1 à 5, **caractérisée en ce que** l'élément de verrouillage (24) pour chaque élément élastique (26, 28), en particulier l'élément de ressort (25, 27), présente une cavité (29, 30) qui est conçue pour le montage de l'élément élastique (26, 28), en particulier l'élément de ressort (25, 27).

7. Unité de fermeture (1) pour un véhicule automobile selon au moins une des revendications 1 à 6, **caractérisée en ce que** l'élément de ressort (25, 27) est conçu comme un ressort en spirale.

8. Unité de fermeture (1) pour un véhicule automobile selon au moins une des revendications 1 à 7, **caractérisée en ce que**, dans un état de fonctionnement non actionné de l'unité de fermeture (1), les gâchettes (6) pénètrent au moins partiellement dans la douille (7), en particulier dans des ouvertures de douille (37), et en même temps l'élément de verrouillage (24) est disposé dans l'évidement de douille (31) et dans l'évidement (23) du cylindre de fermeture (5).

9. Unité de fermeture (1) pour un véhicule automobile selon au moins une des revendications 1 à 8, **caractérisée en ce que**, lorsqu'une clé appropriée est utilisée, les gâchettes (6) sont disposées à l'intérieur du cylindre de fermeture (5) et lorsque le cylindre de fermeture (5) est tourné, l'élément de verrouillage (24) est au moins temporairement complètement disposé dans l'évidement (23) du cylindre de fermeture (5).

10. Unité de fermeture (1) pour un véhicule automobile selon au moins une des revendications 3 à 9, **caractérisée en ce que**, lorsqu'une clé non-appropriée est utilisée, en particulier un outil de prélèvement, l'élément de verrouillage (24) est toujours disposé dans l'évidement de douille (31) de la douille (7).
